Europäisches Patentamt

(19) European Patent Office

Office européen des brevets

(11) Publication number: **0 201 610**

**A1**

(12) # EUROPEAN PATENT APPLICATION

published in accordance with Art. 158(3) EPC

(21) Application number: **85905889.3**

(22) Date of filing: **22.11.85**

Data of the international application taken as a basis:

(86) International application number: **PCT/JP85/00648**

(87) International publication number: **WO86/03161 (05.06.86 86/12)**

(51) Int. Cl.⁴: **B 29 C 45/66**
**B 29 C 45/80, B 22 D 17/26**

(30) Priority: **24.11.84 JP 247012/84**

(43) Date of publication of application:
**20.11.86 Bulletin 86/47**

(84) Designated Contracting States:
**CH DE FR GB IT LI**

(71) Applicant: **FANUC LTD**
**3580, Shibokusa Aza-Komanba Oshino-mura**
**Minamitsuru-gun Yamanashi 401-05(JP)**

(72) Inventor: **TAIRA, Takayuki**
**2-16-16, Mejirodai Hachioji-shi**
**Tokyo 193(JP)**

(72) Inventor: **YAMASHITA, Hiromasa**
**3-27, Tamadaira Hino-shi**
**Tokyo 191(JP)**

(72) Inventor: **NISHIMURA, Yoshihiro**
**Room 101, Fuoburu Hakusan, 5-15-8**
**Hakusan, Bunkyo-ku Tokyo 112(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **METHOD OF FASTENING MOLD IN INJECTION MOLDING MACHINE.**

(57) A method of fastening the mold in an injection molding machine, by using a servo motor (M1) as a drive source for the toggle-type mold fastening device, so that the metal mold can be reliably maintained in a fastened condition without using a braking device. A servo motor (M1) is used as the drive source. When links (L3, L3', L4, L4') of a toggle mechanism (10) that fastens the mold are fully stretched to fasten the mold, a small drive current is supplied to the servo motor (M1) to fully stretch the links (L3, to L4'), so that the mold is maintained under the tightened condition.

./...

F I G . 1

S P E C I F I C A T I O N          **0201610**

MOLD CLAMPING METHOD OF INJECTION MOLDING MACHINE

Technical Field

The present invention relates to a mold clamping method of an injection molding machine using a toggle type mold clamping mechanism.

Background Art

The mold clamping unit of an injection molding machine is conventionally driven by a hydraulic mechanism. Accordingly, a hydraulic pump and a valve are needed, resulting in a complex structure. Furthermore, since the mold clamping process must be controlled hydraulically, mold clamping speed control is complex, and is difficult to perform. A method to drive a mold clamping unit using a servo motor is known by Japanese Provisional Patent Publication No. 59-18782. According to this method using the servo motor, although the mold clamping speed can be controlled easily, a brake unit must be actuated when clamping the mold, resulting in an expensive mold clamping unit.

Disclosure of Invention

It is an object of the present invention to provide a mold clamping method of an injection molding machine, which uses a servo motor as a drive source of a mold clamping unit of the injection molding machine and which can reliably hold the mold in a clamped state without a brake unit.

In order to achieve the above object, according to the present invention, a bent state of a toggle link of a toggle mechanism for performing mold clamping is detected, and once the detected bent state of the toggle link has reached a full-stretched state to clamp a mold, a micro drive current high enough to hold the toggle link in the full-stretched state is supplied to a servo motor for driving the toggle mechanism.

In this manner, the present invention adopts a toggle type mold clamping mechanism, using a servo motor as a drive source thereof, as a mold clamping mechanism of the injection molding machine. The toggle link of the toggle type mold clamping mechanism is stretched completely and stabilized when clamping a mold. The present invention utilizes this fact. In clamping the mold, a micro drive current is supplied to the servo motor in order to maintain the toggle link stable, thereby executing mold clamping. Therefore, the mold can be reliably held at the clamped state without requiring an additional unit such as a brake unit, and mold clamping can be performed with less energy consumption.

Brief Description of Drawings

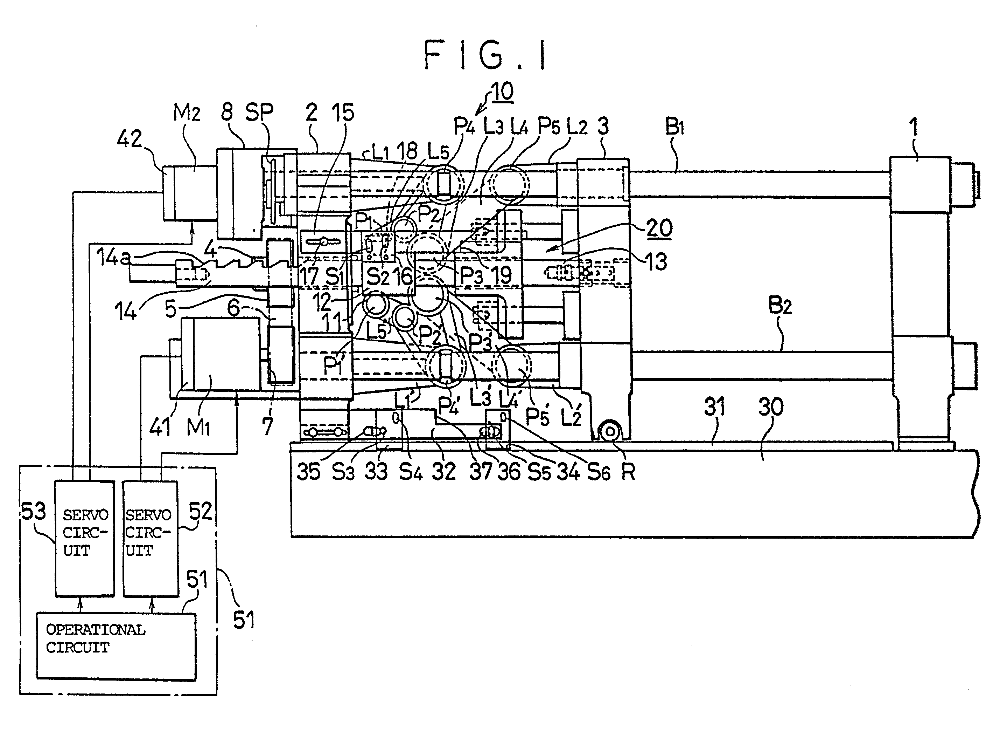

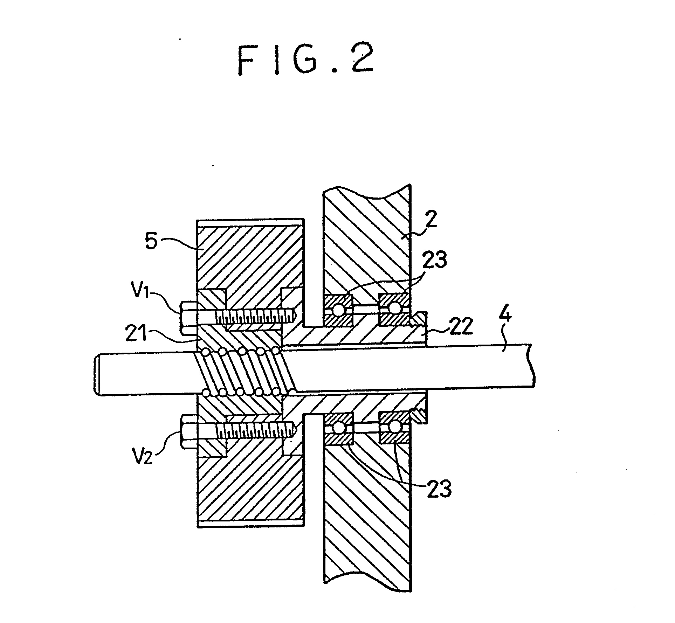

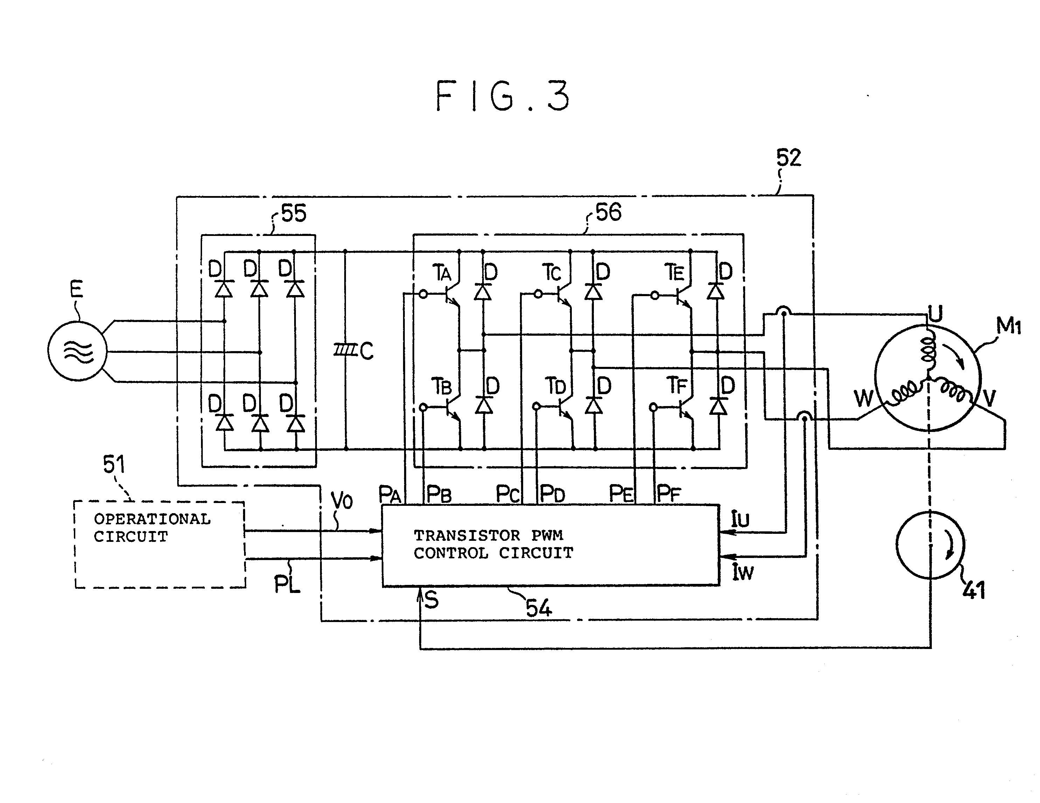

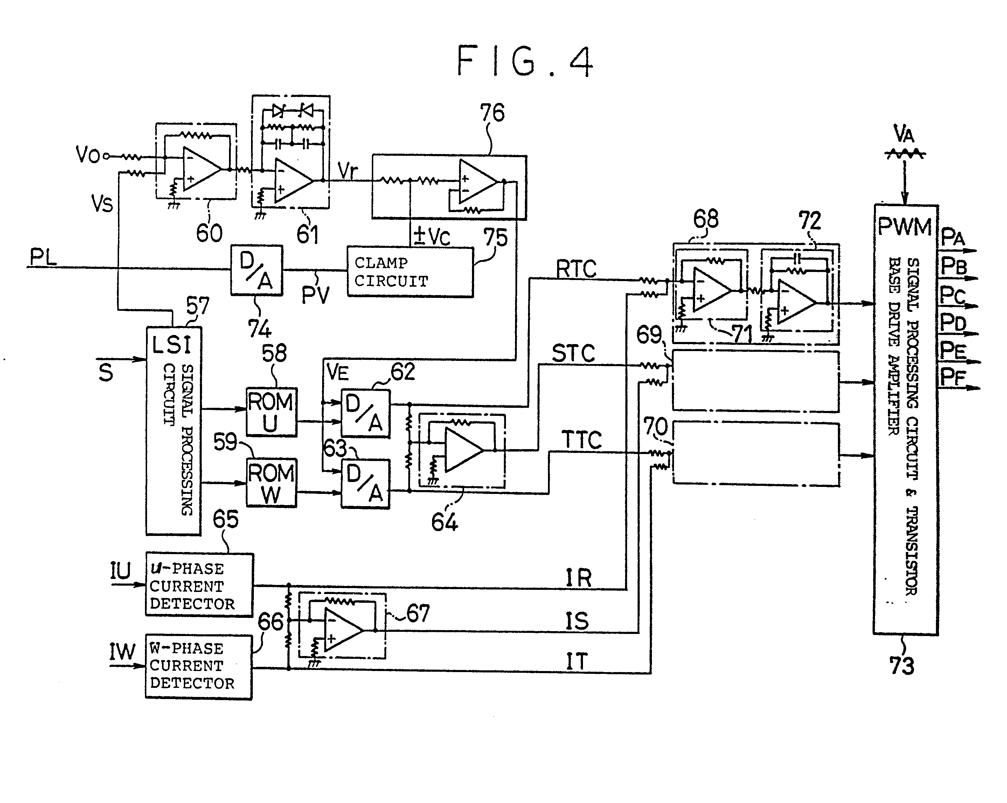

Fig. 1 is a diagram of a mold clamping apparatus of an injection molding machine for practicing a mold clamping method according to an embodiment of the present invention; Fig. 2 is a partially longitudinal sectional view of a rear platen shown in Fig. 1; Fig. 3 is a fundamental block diagram of a servo circuit for driving a servo motor; and Fig. 4 is a block diagram of a transistor PWM control circuit.

Best Mode of Carrying Out the Invention

In Fig. 1, reference numeral 1 denotes a front platen; 2, a rear platen; and 3, a moving platen. The moving platen 3 is guided by four tie-bars (only two tie-bars B1 and B2 are shown) to move to the right or left in Fig. 1. Reference numeral 10 denotes a toggle mechanism; L1 and L1', rear staples fixed to the rear platen 2; L2 and L2', front staples fixed to the moving platen 3; L3 and L3', ternary links; L4 and L4', binary links; and L5 and L5', cross head links.

A cross head 11 is fixed to an end of a ball screw 4. One ends of the cross head links L5 and L5' are rotatably supported on the cross head 11 through pins P1 and P1', respectively. The other ends of the cross head links L5 and L5' are pivotally supported on the ternary links L3 and L3' through pins P2 and P2', respectively. The ternary links L3 and L3' are pivotally supported on the rear staples L1 and L1' through pins P4 and P4', and on one ends of the binary links L4 and L4' through pins P3 and P3', respectively. The other ends of the binary links L4 and L4' are pivotally supported on the front staples L2 and L2' through pins P5 and P5', respectively. The cross head links L5 and L5', the ternary links L3 and L3', and the binary links L4 and L4' constitute the toggle mechanism 10.

A guide pipe 12 is provided on the cross head 11. The guide pipe 12 is fitted on a guide rod 13 fixed on the moving platen 3, so that the cross head 11 is moved along the guide rod 13. The guide rod 13 extends through a hole formed in the rear platen 2. A ratchet rod 14 is provided on the distal end of the guide rod 13. When a front door (not shown) of the mold clamping section is open, a lock bar (not shown) is engaged with a ratchet gear 14a of the ratchet rod 14, thereby preventing the forward movement (to the right in Fig. 1) of the moving platen 3. A sensor plate 16, which has sensors S1 and S2 comprising proximal switches, is provided on the guide pipe 12 on the cross head 11. A detection plate 15, which detects over-travel of the cross head 11, i.e., the moving platen 3, together with the sensors S1 and S2, is adjustably fixed on the rear platen 2 with a pin 17. The sensor S1 detects a step 19 of the detection plate 15. The sensor S2 detects a hole 18 formed in the detection plate 15, so as to detect over-travel of the moving platen 3 exceeding its forward or backward travel limit position. Reference numeral 20 denotes an ejector unit, which is not the direct concern of the present invention and a detailed description thereof is thus omitted.

A servo motor M1 fixed to the rear platen 2 drives a pulley 5 through a pulley 7 similarly driven thereby and a timing belt 6. As shown in Fig. 2, a nut 21 engaged with the ball screw 4, and a sleeve 22 are fixed on the pulley 5 with bolts V1 and V2. The sleeve 22 is rotatably fitted on the rear platen 2 through bearings 23. With this arrangement, upon rotation of the pulley 5, the ball screw 4 is moved to the right or left in Figs. 1 and 2 through the nut 21.

A servo motor M2 moves the rear platen 2 for the purpose of mold thickness adjustment. The servo motor M2 performs deceleration through a decelerating mechanism 8, rotates a sprocket SP pivotally fixed on the rear platen 2, and moves the rear platen 2 forward or backward through threaded portions formed on the corresponding tie-bars (only the tie-bars B1 and B2 are shown). Note that the sprockets SP are provided for the respective tie bars and are coupled to the output shaft of the servo motor M2 through chains, although omitted in the drawings for the sake of simplicity. Rollers R provided in the moving platen 3 roll on rails 31 on the base 30, in order to guide the moving platen 3. A detection plate 32 is adjustably fixed on the rear platen 2 in order to detect over-travel thereof. The detection plate 32 has two holes 35 and 36 and a step 37. Sensors S3 to S6, which are provided on sensor mount plates 33 and 34 fixed on the base 30, detect the holes 35 and 36 and the step 37, thereby detecting over-travel of the rear platen during mold thickness adjustment.

Furthermore, the servo motors M1 and M2 are provided with position detectors 41 and 42 such as pulse encoders. The position detectors 41 and 42 detect a bent state of the links of the toggle mechanism 10 and the position of the rear platen 2 during mold thickness adjustment.

A controller 50, such as a numerical controller, controls the injection molding machine. The controller 50 has an operational circuit 51, and servo circuits 52

- 5 -                                      0201610

and 53. The servo circuits 52 and 53 control the servo motors M1 and M2 upon reception of a speed command from the operational circuit 51 and signals from the position detectors 41 and 42, thereby controlling the toggle mechanism 10 of the mold clamping unit and the position of the rear platen during mold thickness adjustment. Note that the sensors S1 to S6 are also connected to the controller 50 (the connection state is not shown) to detect over-travel of the moving platen 3 and the rear platen, respectively, thereby controlling the same.

Fig. 3 is a basic circuit block diagram of the servo circuits which use permanent magnet synchronous motors as the servo motors M1 and M2. The servo circuit 52 is identical with the servo circuit 53 except that it has a torque limit means (to be described later). Therefore, only the servo circuit 52 is shown. Such a servo circuit is conventionally known and will be described only schematically. The servo circuit 52 has a three-phase power supply E, a rectifying circuit 55, a transistor inverter 56, and a transistor PWM control circuit 54. The servo motor M1 for driving the toggle mechanism 10 and the position detector 41 are mentioned before. The transistor PWM control circuit 54 compares a present speed S detected by the position detector 41 with a speed command value Vo supplied from the operational circuit 51, turns on/off the transistors TA to TF of the transistor inverter 56, controls the currents flowing in the U-, V-, and W-phase windings of the servo motor M1, thereby controlling the rotational speed of the servo motor M1. The transistor PWM control circuit 54 has an arrangement as shown in Fig. 4. More specifically, in Fig. 4, the transistor PWM control circuit 54 has a signal processing circuit 57, ROMs 58 and 59, and a differential amplifier 60. The ROMs 58 and 59 store values of the U and W phases perpendicular to a main field magnetic flux which are to be output for the present position of the rotor of the servo motor M1. The differential amplifier 60 amplifies a difference between the voltage Vo representing a speed command and a voltage $V_S$ representing the present speed supplied form the signal processing circuit 57, and outputs the amplified voltage. A filter 61 has a frequency characteristic to decrease its gain when the frequency is high and to increase its gain when the frequency is low. The peak voltage of the filter 61 is clamped by a Zener diode ZD1. A D/A converter 74 converts into an analog signal a digital torque limit command PV which is supplied from the operational circuit 51 to set the load torque. Reference numeral 75 denotes a clamp circuit which responds to a torque limit command PL. When a voltage Vr generated by the difference between the speed command Vo and the present speed $V_S$ and supplied from the filter 61 to an amplifier 76 exceeds a predetermined voltage +Vc or is below a predetermined voltage -Vc, the clamp circuit 75 clamps the voltage Vr at the voltage +Vc or -Vc. The D/A converter 74, the clamp circuit 75, and the amplifier 76 constitute the torque limit means. Reference numerals 62 and 63 denote multiplying digital/analog converters, which multiply a voltage $V_E$ output from the amplifier 76 by the U- and W-phase command outputs from the ROMs 58 and 59, respectively, thereby forming U- and W-phase current commands RTC and TTC. An adder 64 adds the U- and W-phase current commands RTC and TTC to form a current command STC of a V phase which is shifted from the U or W phase by 120°. Detectors 65 and 66 detect currents IU and IW flowing in the U- and W-phase windings of the servo motor M1. An adder 76 adds U- and W-phase currents IR and IT which are detected by the U- and W-phase current detectors 65 and 66, respectively, in order to calculate a V-phase current IS. Circuits 68, 69, and 70 output current command voltages to be supplied for the U, V, and W phases, respectively. Although the circuits 68, 69, and 70 receive different input signals, they have the same configuration. More specifically, the circuit 68 has a differential amplifier 71 and a low-pass filter circuit 72. The differential amplifier 71 amplifies the difference between the U-phase current command RTC and the detected present U-phase current IR. The low-pass filter circuit 72 passes only a frequency component of a reference carrier wave in the output of the differential amplifier 71. The circuits 69 and 70 are different from the circuit 68 in that they receive a V-phase current command STC and a present current IS, and a W-phase current command TTC and a present current IT, respectively. Except this, the circuits 69 and 70 are the same as the circuit 68. A circuit 73 comprises a PWM signal processing circuit and a transistor base drive amplifier. The circuit 73 compares the signals from the circuits 68, 69, and 70 with a reference carrier wave $V_A$, and outputs PWM signals PA to PF to turn on/off the transistors TA to TF of the transistor inverter 56.

With the above arrangement, the servo motor M1 is controlled in the following manner. The difference between the present speed $V_S$ output from the signal processing circuit 57 and the speed command Vo is amplified by the differential amplifier 60 in response to the signal S from the position detector 41. Unless the voltage Vr output through the filter 61 exceeds the clamp voltage +Vc or is below the clamp voltage -Vc which are set by the clamp circuit 75, it is output ($V_E$) unchanged from the amplifier 76. When the voltage Vr exceeds the clamp voltage +Vc or is below the clamp voltage -Vc, the clamp voltage +Vc or -Vc is output as the output voltage $V_E$ (= +Vc or -Vc) of the amplifier 76, and is supplied to the multiplying digital/analog converters 62 and 63. Meanwhile, the the U- and W-phase ROMs 58 and 59 receive address signals corresponding to the present rotor position from the signal processing circuit 57, and output command values for the U and W phases corresponding to the present rotor position to the multiplying digital/analog converters 62 and 63. The multiplying digital/analog converters 62 and 63 multiply the error signal by the command values from the ROMs 58 and 59, respectively, to produce the U- and W-phase current commands RTC, TTC, and add these commands RTC and TTC, thereby producing the V-phase current command STC. The differences between the present U-, V-, and W-phase current values IR, IS, and IT, which are detected by the U- and W-phase current detectors 65 and 66 and the adder 67, and the U-, V-, and W-phase current commands RTC, STC, TTC, respectively, are amplified by the differential amplifiers 71 of the circuits 68, 69, and 70, respectively. The amplified differents are filtered by the filter circuits 72, and voltages corresponding to the command current values for the respective phases are output to the PWM signal processing circuit to be compared with the reference carrier wave $V_A$. Then, the resultant PWM signals PA to PF are supplied to the transistor inverter 56 through the transistor base drive amplifier so as to turn on/off the transistors TA to TF thereof, thereby controlling the speed of the servo motor M1. Note that the servo circuit 53 is identical to the servo circuit 52 except that it does not have the D/A converter 74, the clamp circuit 75, and the amplifiers 76 shown in Fig. 4 which constitute the torque limit means.

The mold clamping operation of the injection molding machine of this embodiment will be described. Upon start of the mold clamping process, when the speed command voltage Vo is supplied from the operational circuit 51 of the controller 50, it is compared with the voltage $V_S$ corresponding to the present speed which is obtained by processing the signal S, detected by the position detector 41, by the signal processing circuit 57. The resultant error signal Vr is output from the filter 61 and input to the amplifier 76 constituting the torque limit means. At the start of the mold clamping, the torque limit command PL is not supplied from the operational circuit 51 (the output voltage of the clamp circuit 75 is high enough to cause the servo motor M1 to produce the maximum torque). Therefore, the output voltage Vr from the filter 61 is input to the multiplying digital/analog converters 62 and 63 in order to drive the servo motor M1 to rotate at the command speed as described above, thereby performing speed control.

When the servo motor M1 is driven, the pulley 7, the timing belt 6, and the pulley 5 are rotated. The ball screw 4 engaged with the nut 21 rotating together with the pulley 5 is then moved forward (to the right in Fig. 1). The cross head 11 fixed to the distal end of the ball screw 4 is also moved forward, and pivots the ternary links L3 and L3' and the binary links L4 and L4' about the pins P4 and P4', and P5 and P5', respectively, through the cross head links L5 and L5', thereby moving the moving platen 3 forward. Immediately before the rear staple L1 (L1'), the ternary link L3 (L3'), and the front staple L2 (L2') are aligned on a straight line, that is, immediately before the pins P4, P3, and P5 (the pins P4', P3', and P5') are aligned on a straight line and the ternary links L3 and L3' and the binary links L4 and L4' of the toggle mechanism 10 are stretched completely, the mold members fixed to the front platen 1 and the moving platen 3, respectively, are brought into contact with each other. The servo motor M1 is then further driven to detect the time point at which the ternary links L3 and L3' and the binary links L4 and L4' of the toggle mechanism are stretched completely, by accumulating the speed commands, i.e., the shift amounts within a unit time, by a present value register in the operational circuit 51. A torque limit command PL is then output to clamp the output voltage Vr of the filter 61 at the output +Vc or -Vc from the clamp circuit 75. As a result, the servo motor M1 is driven by a micro current, and holds the respective links at positions by the limited torque. More specifically, the tie-bars (only the tie-bars B1 and B2 are shown) are pulled by the stretch amount of the ternary links L3 and L3' and the binary links L4 and L4'. The mold is thus clamped by the elastic restoration force of the tie bars which is generated upon stretching. During this mold clamping, the ternary links L3 and L3' and the binary links L4 and L4' are aligned on a straight line, thereby keeping a stable state. Thus, no additional force is needed from the servo motor M1 to clamp the mold. Only the ternary links L3 and L3' and the binary links L4 and L4' must be prevented from shifting accidentally from the aligned positions because of a vibration or some other external factor, and be held in position. For this purpose, a micro drive current sufficient for holding the links at the full-stretched state is supplied to the servo motor M1, and the links L3 to L4' of the toggle mechanism 10 are held not to shift from the stable positions due to vibration or the like.

When the mold is to be opened, the servo motor M1 is driven in the reverse direction to move the ball screw 4 backward, thereby opening the mold.

- 11 -

0201610

## C L A I M S

1. A mold clamping method of an injection molding machine, which comprises the steps of: detecting a bent state of a toggle link of a toggle mechanism for performing mold clamping; clamping a mold once the detected bent state of said toggle link has reached a full-stretched state; and supplying a servo motor for driving said toggle mechanism with a micro drive current high enough to hold said toggle link in the full-stretched state.

2. A method according to claim 1, wherein said toggle link has a plurality of links which are adapted to be aligned on a straight line to have a stable state in the full-stretched state of said toggle link, and the micro drive current supplied to said servo motor is high enough to prevent said links aligned on the straight line and held in the stable state from shifting from the stable state due to an external factor.

FIG.1

FIG.2

# FIG.3

OPERATIONAL CIRCUIT

TRANSISTOR PWM CONTROL CIRCUIT

# FIG. 4

# INTERNATIONAL SEARCH REPORT

International Application No  PCT/JP85/00648

| I.  CLASSIFICATION OF SUBJECT MATTER (if several classification symbols apply, indicate all) [3] |
|---|

According to International Patent Classification (IPC) or to both National Classification and IPC

Int.Cl[4]  B29C 45/66, B29C 45/80, B22D 17/26

| II.  FIELDS SEARCHED |
|---|

| Minimum Documentation Searched [4] | |
|---|---|
| Classification System | Classification Symbols |
| IPC | B29C 45/66, B29C 45/64, B29C 45/80 <br> B22D 17/26 |

Documentation Searched other than Minimum Documentation
to the Extent that such Documents are Included in the Fields Searched [5]

| | |
|---|---|
| Jitsuyo Shinan Koho | 1949 - 1985 |
| Kokai Jitsuyo Shinan Koho | 1971 - 1985 |

| III.  DOCUMENTS CONSIDERED TO BE RELEVANT [14] | | |
|---|---|---|
| Category* | Citation of Document, [16] with indication, where appropriate, of the relevant passages [17] | Relevant to Claim No [18] |
| A | Seto Shoji Kanshu "Shashutsu Seikei (Zoho Kaiteiban)" 5th edition 20 January 1968 (20. 01. 68) Plastic Age Kabushiki Kaisha P.109-119 | 1, 2 |
| A | JP, A, 59-187826 (Nissei Jushi Kogyo Kabushiki Kaisha) 25 October 1984 (25. 10. 84) (Family: none) | 1, 2 |
| P | JP, A, 60-112417 (Fanuc Ltd.) 18 June 1985 (18. 06. 85) (Family: none) | 1, 2 |

\* Special categories of cited documents: [15]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure. use. exhibition or other means

"P"  document published prior to the international filing date but later than the priority date claimed

"T"  later document published after the international filing date or priority date and not in conflict with the application but cited to understand the principle or theory underlying the invention

"X"  document of particular relevance: the claimed invention cannot be considered novel or cannot be considered to involve an inventive step

"Y"  document of particular relevance. the claimed invention cannot be considered to involve an inventive step when the document is combined with one or more other such documents, such combination being obvious to a person skilled in the art

"&"  document member of the same patent family

| IV.  CERTIFICATION | |
|---|---|
| Date of the Actual Completion of the International Search [2] | Date of Mailing of this International Search Report [2] |
| February 3, 1986 (03. 02. 86) | Feburary 17, 1986 (17. 02. 86) |
| International Searching Authority [1] | Signature of Authorized Officer [1] |
| Japanese Patent Office | |

Form PCT-ISA/210 (second sheet) (October 1981)